(19) Europäisches Patentamt
European Patent Office
Office européen des brevets

(11) Veröffentlichungsnummer: 0 017 845
B1

# (12) EUROPÄISCHE PATENTSCHRIFT

(45) Veröffentlichungstag der Patentschrift: 10.11.82

(51) Int. Cl.³: C 08 F 10/00, C 08 F 4/64

(21) Anmeldenummer: 80101734.4

(22) Anmeldetag: 01.04.80

## (54) Verfahren zum Herstellen von Homo- und Copolymerisaten von alpha-Monoolefinen mittels eines Ziegler-Katalysatorsystems.

(30) Priorität: 07.04.79 DE 2914168

(43) Veröffentlichungstag der Anmeldung: 29.10.80 Patentblatt 80/22

(45) Bekanntmachung des Hinweises auf die Patenterteilung: 10.11.82 Patentblatt 82/45

(84) Benannte Vertragsstaaten: AT BE DE FR GB IT

(56) Entgegenhaltungen:
DE-A-2 129 659
DE-A-2 829 623
FR-A-2 164 776
US-A-3 941 760

(73) Patentinhaber: BASF Aktiengesellschaft, Carl-Bosch-Strasse 38, D-6700 Ludwigshafen (DE)

(72) Erfinder: Klaerner, Peter, Dr., Hauptstrasse 62, D-6719 Battenberg (DE)
Erfinder: Gruber, Wolfgang, Dr., Lorscher Ring 2B, D-6710 Frankenthal (DE)
Erfinder: Ehlers, Ehler, Ulmenstrasse 13, D-6704 Mutterstadt (DE)
Erfinder: Frielingsdorf, Hans, Dr., Auf dem Koeppel 4, D-6702 Bad Duerkheim 1 (DE)

EP 0 017 845 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verfahren zum Herstellen von Homo- und Copolymerisaten von α-Monoolefinen mittels eines Ziegler-Katalysatorsystems

Die vorliegende Erfindung baut auf auf einem Verfahren zum Herstellen von Homo- und Copolymerisaten von $C_2$- bis $C_6$-α-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und

(2) einer Aluminiumverbindung der Formel

$$AlA_{3-n}X_n,$$

worin stehen

A für einen $C_1$- bis $C_{12}$-Kohlenwasserstoffrest,

X für Chlor, Brom bzw. Wasserstoff und

n für eine Zahl von 0 bis 2

mit den Massgaben, dass das Atomverhältnis Titan aus der Katalysatorkomponente (1) : Aluminium aus der Katalysatorkomponente (2) im Bereich von 1:0,1 bis 1:500 liegt, und dass man

(1.1) zum Herstellen der Katalysatorkomponente (1)

(1.1.1) eine unter Normalbedingungen feste Titanverbindung (I) aus der Reihe der Chloride, Oxychloride bzw. Alkoxychloride des drei- bzw. vierwertigen Titans, wobei die Alkoxygruppen jeweils bis zu 8 Kohlenstoffatome aufweisen können, oder der Mischchloride des dreiwertigen Titans mit der Formel

$$TiCl_3 \cdot Z\,(AlCl_3),$$

wobei Z eine Zahl von weniger als 0,5 ist, und

(1.1.2) eine Halogenverbindung (II), die erhalten worden ist durch ein 1 bis 100 Stunden dauerndes Heisshalten auf einer Temperatur von 150 bis 600 °C und anschliessendes Chlorieren bis zu einem Chlorgehalt des Materials von 40 bis 76 Gewichtsprozent, aus einem Stoff (III) der allgemeinen Formel

$$(Me^{II})_6 \cdot (Me^{III})_2 \cdot (OH)_{16} \cdot (CO_3)_1 \cdot (H_2O)_4,$$

worin stehen

$Me^{II}$ für Magnesium, Calcium, Zink bzw. Mangan und

$Me^{III}$ für Aluminium bzw. Chrom,

im Gewichtsverhältnis Titanverbindung (I) : Halogenverbindung (II) von 1:200 bis 1:2 über eine Zeitspanne von 5 bis 100 Stunden unter einer Mahlbeschleunigung von 4 bis 6 $m/s^2$ miteinander vermahlt unter Bildung eines festphasigen Vermahlungsprodukts (IV).

Polymerisationsverfahren dieser Gattung sind bekannt, wobei als Prototyp für den vorliegenden Fall das z.B. in der US-PS 3 941 760 veröffentlichte gelten kann.

Das genannte Verfahren hat – ebenso wie in Parallele zu setzende andere Verfahren – zum Kernstück eine in besonderer Weise hergestellte und damit in besonderer Weise ausgestaltete Titan enthaltende Katalysatorkomponente (1).

Die besonderen Ausgestaltungen der Titan enthaltenden Katalysatorkomponente werden vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit der Katalysatorsysteme (1) erhöht ist.

(b) Katalysatorsysteme, durch die weniger bzw. kein Halogen in das Polymerisat eingebracht wird; – was zu erreichen ist, indem

($b_1$) die Ausbeute gemäss (a) gesteigert wird und/oder

($b_2$) Titan enthaltende Katalysatorkomponenten eingesetzt werden, die möglichst wenig bzw. kein Halogen enthalten.

(c) Katalysatorsysteme, die ihre positiven Wirkungen auch bei relativ niederen Temperaturen entfalten; – was z.B. für Trockenphasenpolymerisationen von Bedeutung sein kann.

(d) Katalysatorsysteme, durch welche die morphologischen Eigenschaften der Polymerisate in bestimmter Weise beeinflusst werden, etwa im Sinne einer einheitlichen Korngrösse und/oder einer Verminderung des Feinstkornanteils und/oder eines hohen Schüttgewichtes; – was z.B. für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind; – z.B. solche, die sich in (inerten) Kohlenwasserstoff-Hilfsmedien zubereiten lassen.

(f) Katalysatorsysteme, die es ermöglichen, bei Polymerisationen unter Einwirkung von Molekulargewichtsreglern, wie Wasserstoff, mit relativ geringen Mengen an Regler auszukommen; – was z.B. für die Thermodynamik der Verfahrensführung von Bedeutung sein kann.

(g) Katalysatorsysteme, die auf spezielle Polymerisationsverfahren zugeschnitten sind; – etwa solche, die z.B. entweder auf die spezifischen Besonderheiten der Suspensionspolymerisation oder auf die spezifischen Besonderheiten der Trockenphasenpolymerisation abgestimmt sind.

Nach den bisherigen Erfahrungen gibt es unter den mannigfachen Zielen etliche Ziele, die man durch besondere Ausgestaltungen der Titan erhaltenden Katalysatorkomponente nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschten Ziele möglichst wenig zurücksetzen muss.

In diesem Rahmen liegt auch die Aufgabenstellung der vorliegenden Erfindung: Eine neue Art Titan enthaltender Katalysatorkomponente aufzuzeigen, mit der man gegenüber bekannten Titan enthaltenden Katalysatorkomponenten – unter vergleichbarer Zielsetzung – bessere Ergebnisse erreichen kann.

Es wurde gefunden, dass die gestellte Aufgabe gelöst werden kann mit einer Titan enthaltenden Katalysatorkomponente, die ein in besonderer Weise erhaltenes Folgeprodukt des Vermahlungsprodukts (IV) aus dem eingangs definierten Verfahren ist.

Gegenstand der vorliegenden Erfindung ist dementsprechend ein Verfahren zum Herstellen von Homo- und Copolymerisaten von $C_2$- bis $C_6$-α-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und

(2) einer Aluminiumverbindung der Formel

$$AlA_{3-n}X_n,$$

worin stehen

A für einen $C_1$- bis $C_{12}$-Kohlenwasserstoffrest, vorzugsweise einen $C_1$- bis $C_{12}$-Alkylrest, und insbesondere einen $C_2$- bis $C_8$-Alkylrest,

X für Chlor, Brom bzw. Wasserstoff, vorzugsweise Chlor bzw. Wasserstoff, und

n für eine Zahl von 0 bis 2, vorzugsweise eine Zahl von 0 bis 1, und insbesondere die Zahl 0,

mit den Massgaben, dass das Atomverhältnis Titan aus der Katalysatorkomponente (1) : Aluminium aus der Katalysatorkomponente (2) im Bereich von 1:0,1 bis 1:500, vorzugsweise 1:0,2 bis 1:200, liegt, und dass man

(1.1) zum Herstellen der Katalysatorkomponente (1)

(1.1.1) eine unter Normalbedingungen feste Titanverbindung (I) aus der Reihe der Chloride, Oxychloride bzw. Alkoxychloride des drei- bzw. vierwertigen Titans, wobei die Alkoxygruppen jeweils bis zu 8 Kohlenstoffatome aufweisen können, oder – vorzugsweise – der Mischchloride des dreiwertigen Titans mit der Formel

$$TiCl_3 \cdot Z\,(AlCl_3)\,,$$

wobei Z eine Zahl von weniger als 0,5, insbesondere eine Zahl von 0,31 bis 0,35 ist, und

(1.1.2) eine Halogenverbindung (II), die erhalten worden ist durch ein 1 bis 100, vorzugsweise 2 bis 50 Stunden dauerndes Heisshalten auf einer Temperatur von 150 bis 600, vorzugsweise von 200 bis 400 °C, und anschliessendes Chlorieren bis zu einem Chlorgehalt des Materials von 40 bis 76, vorzugsweise von 50 bis 72 Gewichtsprozent, aus einem Stoff (III) der allgemeinen Formel

$$(Me^{II})_6 \cdot (Me^{III})_2 \cdot (OH)_{16} \cdot (CO_3)_1 \cdot (H_2O)_4,$$

worin stehen

$Me^{II}$ für Magnesium, Calcium, Zink bzw. Mangan und

$Me^{III}$ für Aluminium bzw. Chrom,

im Gewichtsverhältnis Titanverbindung (I) : Halogenverbindung (II) von 1:200 bis 1:2, vorzugsweise 1:10 bis 1:20 über eine Zeitspanne von 5 bis 100, vorzugsweise 10 bis 20 Stunden unter einer Mahlbeschleunigung von 4 bis 6 $m/s^2$ miteinander vermahlt unter Bildung eines festphasigen Vermahlungsprodukts (IV).

Das erfindungsgemässe Verfahren ist dadurch gekennzeichnet, dass man beim Herstellen der Katalysatorkomponente (1)

(1.2) in einer zusätzlichen Stufe

(1.2.1) das gemäss (1.1) erhaltene Vermahlungsprodukt (IV),

(1.2.2) ein $C_1$- bis $C_{12}$-; vorzugsweise ein $C_1$- bis $C_8$-Alkanol (V) und

(1.2.3) ein $C_5$- bis $C_{12}$-, vorzugsweise ein $C_6$- bis $C_8$-Alkan (VI)

in den Gewichtsverhältnissen Vermahlungsprodukt (IV) : Alkanol (V) von 1:0,01 bis 1:1, vorzugsweise 1:0,03 bis 1:0,75 und Vermahlungsprodukt (IV) : Alkan (VI) von 1:1 bis 1:1000, vorzugsweise 1:1 bis 1:100, zusammenbringt unter Bildung einer Suspension (VII) und das Ganze bei dauernder Durchmischung über eine Zeitspanne von 0,5 bis 60, vorzugsweise 1 bis 30, und insbesondere 1 bis 10 Minuten auf einer Temperatur von 0 bis 195, vorzugsweise 10 bis 100 °C hält, und dann

(1.3) in einer weiteren Stufe

(1.3.1) die gemäss (1.2) erhaltene Suspension (VII) mit

(1.3.2) einem Acylhalogenid (VIII) der allgemeinen Formel

$$R{-}CO{-}X$$

worin stehen R für einen gesättigten $C_1$- bis $C_{18}$-Kohlenwasserstoffrest, vorzugsweise einen gesättigten $C_1$- bis $C_8$-Kohlenwasserstoffrest, und insbesondere einen $C_1$- bis $C_4$-Alkylrest oder den Phenylrest, – mit der Massgabe, dass in den genannten Resten bis zu 3, insbesondere bis zu 2 Wasserstoffatome durch Cl bzw. Br, vorzugsweise Cl substituiert sein können – und X für F, Cl, Br bzw. J, vorzugsweise Cl bzw. Br und insbesondere Cl, unter Erhaltung des Zustandes einer Suspension solange versetzt, bis das Atomverhältnis Titan aus dem in der Suspension (VII) enthaltenen Feststoff: Acylhalogen aus dem Acylhalogenid (VIII) im Bereich von 1:0,01 bis 1:100, vorzugsweise von 1:0,05 bis 1:50 liegt; wobei das aus Stufe (1.3) resultierende, in Suspension vorliegende festphasige Produkt die Titan enthaltende Katalysatorkomponente (1) ist.

Zu dem erfindungsgemässen Verfahren ist im einzelnen das Folgende zu bemerken:

Das Polymerisationsverfahren als solches kann – unter Beachtung der kennzeichnenden Besonderheiten – in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren.

Die erwähnten technologischen Ausgestaltungen – mit anderen Worten: die technologischen Varianten der Polymerisation von Olefinen nach Ziegler – sind aus der Literatur und Praxis wohlbekannt, so dass sich nähere Ausführungen zu ihnen erübrigen. Zu bemerken ist allenfalls noch, dass die neue Titan enthaltende Katalysatorkomponente (1) – wie entsprechende bekannte Katalysatorkomponenten – z.B. ausserhalb oder innerhalb des Polymerisationsgefässes mit der Katalysatorkomponente (2) zusammengebracht werden kann; im letztgenannten Fall etwa durch räumlich getrennten Eintrag der Komponenten, die im übrigen in Form einer Suspension (Katalysatorkomponente (1) bzw. Lösung (Katalysatorkomponente (2)) gehandhabt werden können.

Zu der neuen Titan enthaltenden Katalysatorkomponente (1) selbst ist das Folgende zu sagen:

Ihre Herstellung erfolgt in drei Stufen, die oben sowie nachstehend mit (1.1), (1.2) und (1.3) bezeichnet sind.

In Stufe (1.1) werden eine unter Normalbedingungen feste Titanverbindung (I) der oben definierten Art und eine bestimmte, in der oben definierten Weise erhaltene Halogenverbindung (II) – vorzugsweise trocken – miteinander vermahlen unter Bildung eines festphasigen Vermahlungsproduktes (IV). In Stufe (1.2) wird letzteres mit einem bestimmten Alkanol (V) und einem bestimmten Alkan (VI) zusammengebracht unter Bildung einer Suspension (VII). In Stufe (1.3) wird die letztgenannte Suspension mit einem Acylhalogenid (VIII) der oben definierten Art unter Einhaltung des Zustandes einer Suspension versetzt. Das aus Stufe (1.3) resultierende, in Suspension vorliegende festphasige Produkt ist die neue Titan enthaltende Katalysatorkomponente (1). Im einzelnen ist dazu das Folgende zu sagen:

### Stufe (1.1)

Die Vermahlung in dieser Stufe ist mit keinen Besonderheiten verbunden und kann vom Fachmann ohne nähere Erläuterungen problemlos durchgeführt werden. Zu erwähnen ist allenfalls, dass sich als Mühlen insbesondere Kugelmühlen, vor allem Kugelschwingmühlen, eignen; im übrigen kann auf die eingangs bereits zitierte US-PS-3 941 760 verwiesen werden.

### Stufe (1.2)

Das Herstellen der Suspension in dieser Stufe ist ebenfalls mit keinen Schwierigkeiten verbunden und für den Fachmann ohne weiteres möglich. Zu erwähnen ist, dass sich als vorteilhaft herausgestellt hat, zunächst das Vermahlungsprodukt (IV) in dem Alkan (VI) zu suspendieren – so wie man üblicherweise suspendiert, z.B. in einem Rührgefäss – und zu der dabei erhaltenen Suspension dann den Alkohol (V) mit einer solchen Geschwindigkeit zuzugeben, dass örtliche Wärmestaus vermieden werden.

### Stufe (1.3)

Auch diese Stufe ist ohne Probleme durchführbar; zu beachten ist lediglich, dass die dabei ablaufende Reaktion exotherm ist und daher – ebenfalls zur Vermeidung örtlicher grösserer Wärmestaus – das Acylhalogenid (VIII) nicht schussweise in die Suspension (VII) eingebracht werden sollte.

Die aus Stufe (1.3) als suspendiertes festphasiges Produkt resultierende neue Titan enthaltende Katalysatorkomponente (1) kann unmittelbar in Form der jeweils erhaltenen Suspension – gegebenenfalls nach einer Wäsche durch Digerieren mit einem Alkan – als Titan enthaltende Katalysatorkomponente verwendet werden. Im allgemeinen ist es aber zweckmässig, das jeweilige festphasige Produkt zu isolieren und dann erst als Katalysatorkomponente (1) einzusetzen; – wobei sich zum Isolieren z.B. der folgende Weg anbietet:

Man trennt das festphasige Produkt von der flüssigen Phase mittels Filtration und wäscht es mit reinem Alkan (etwa der Art, die man auch als Suspensionsmittel verwendet hatte), worauf man es trocknet, etwa im Vakuum.

Die neuen Titan enthaltenden Katalysatorkomponenten (1) lassen sich im Rahmen des eingangs definierten Polymerisationsverfahrens zum Herstellen der dort genannten Polymerisate so einsetzen, wie man üblicherweise die Titan enthaltenden Katalysatorkomponenten (1) bei der Polymerisation von Olefinen nach Ziegler einsetzt. Insoweit sind also keine Besonderheiten gegeben, und es kann auf die aus Literatur und Praxis wohlbekannten Einsatzweisen verwiesen werden. – Es ist lediglich noch zu sagen, dass die neue Katalysatorkomponente sich vornehmlich zum Herstellen von Homopolymerisaten des Äthylens eignet und dass im Falle des Herstellens von Copolymerisaten des Äthylens mit höheren α-Monoolefinen oder des Herstellens von Homopolymerisaten von höheren α-Monoolefinen vor allem Propen, Buten-1,4-Methylpenten-1 und Hexen-1 als α-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Titan enthaltenden Katalysatorkomponenten (1) betrifft, ist im einzelnen noch das Folgende zu sagen:

Die in Stufe (1.1) einzusetzenden, unter Normalbedingungen festen Titanverbindungen (I) können z.B. sein Titantrichlorid als solches, oder ein Alkoxychlorid der Formel $TiCl(OC_3H_7)_3$. Die demgegenüber zu bevorzugenden Mischchloride des dreiwertigen Titans mit der oben definierten Formel $TiCl_3 \cdot Z\ (AlCl_3)$ können insbesondere die bei Ziegler-Katalysatorsystemen üblichen sein, z.B. ein bei der Reduktion von Titantetrachlorid mittels Aluminium erhaltenes Reaktionsprodukt. Als besonders gut geeignet hat sich erwiesen, das

Mischchlorid der Formel $TiCl_3 \cdot \frac{1}{3}\ AlCl_3$. – Die

Titanverbindungen (I) können eingesetzt werden

in Form von Einzelindividuen sowie Gemischen aus zwei oder mehr Einzelindividuen.

Die ebenfalls in Stufe (1.1) einzusetzenden Halogenverbindungen (II), deren Herstellung sowie Vorprodukte – also die Stoffe (III) mit der oben definierten Formel $(Me^{II})_6 \cdot (Me^{III})_2 \cdot (OH)_{16} \cdot (CO_3)_3 \cdot (H_2O)_4$ – gehören zum bekannten Stand der Technik, wie er z.B. in der GB-PS-1 380 949 niedergelegt ist. In soweit erübrigen sich also nähere Erläuterungen. Zu bemerken ist jedoch, dass sich für den erfindungsgemässen Zweck solche Stoffe (III) besonders eignen, in deren Formel $Me^{II}$ steht für Magnesium, Mangan oder Gemische aus einem oder beiden dieser Elemente mit untergeordneten Molmengen Zink, und $Me^{III}$ steht für Aluminium oder Gemische aus diesem Element mit untergeordneten bis gleichen Molmengen Chrom. Geeignete Stoffe (III) haben z.B. die Elementkombination $(Mg^{II})_5 \cdot (Ca^{II}) \cdot (Al^{III})_2$ oder $(Mn^{II})_5 \cdot (Ca^{II}) \cdot (Al^{III})_2$ und vorzuziehende Stoffe (III) z.B. die Kombinationen $(Mg^{II})_5 \cdot (Zn^{II}) \cdot (Al^{III})_2$, $(Mg^{II})_4 \cdot (Zn^{II})_2 \cdot (Al^{III})_2$, $(Mn^{II})_6 \cdot (Al^{III})_2$, $(Mn^{II})_5(Zn^{II}) \cdot (Al^{III})_2$, $(Mn^{II})_4 \cdot (Zn^{II})_2 \cdot (Al^{III})_2$, $(Mg^{II})_6 \cdot (Al^{III}) \cdot (Cr^{III})$ oder $(Mn^{II})_6 \cdot (Al^{III}) \cdot (Cr^{III})$. Der am besten geeignete Stoff (III) hat die Elementekombination $(Mg^{II})_6 \cdot (Al^{III})_2$. – Die Halogenverbindungen (II) können im übrigen eingesetzt werden in Form von Einzelindividuen oder Gemischen aus zwei oder mehr Einzelindividuen.

In Stufe (1.2) werden $C_1$- bis $C_{12}$-Alkanole (V) eingesetzt; namentliche Beispiele hierfür sind Methanol, Äthanol, die Propanole sowie die Butanole; ferner n-Hexanol, 2-Äthylhexanol, n-Octanol, n-Decanol und 2,7-Diäthyloctanol. Als besonders gut geeignet haben sich erwiesen, z.B. Methanol, Äthanol, Isopropanol sowie n-Butanol. – Die Alkanole (V) können eingesetzt werden in Form von Einzelindividuen sowie Gemischen aus zwei oder mehr Einzelindividuen.

Ebenfalls in Stufe (1.2) werden eingesetzt $C_5$- bis $C_{12}$-Alkane (VI), z.B. Cyclopentan, Cyclohexan, n-Hexan, n-Heptan, 2-Äthylhexan, n-Octan, n-Decan oder n-Dodecan. Zu bevorzugen sind die Hexane, Heptane und Oktane in Form von Isomerindividuen oder Isomermischungen. Besonders gut geeignet ist n-Heptan. – Auch die Alkane (VI) können im übrigen eingesetzt werden in Form von Einzelindividuen sowie Gemischen aus zwei oder mehr Einzelindividuen.

Zu den in Stufe (1.3) einzusetzenden Acylhalogeniden (VIII) ist zu sagen, dass unter dem Begriff «gesättigter Kohlenwasserstoffrest» Kohlenwasserstoffreste verstanden werden, die alkanische und/oder aromatische Kohlenstoff-Kohlenstoff-Bindungen aufweisen. An geeigneten Individuen sind beispielsweise zu nennen: Acetylchlorid, Acetylbromid, n-Propionylchlorid, n-Butyrylchlorid, Monochloracetylchlorid, Dichloracetylchlorid, Benzoylchlorid und Phenylacetylchlorid. Hiervon zu bevorzugen sind Acetylchlorid, Monochloracetylchlorid und Benzoylchlorid. – Die Acylhalogenide (VIII) können eingesetzt werden in Form von Einzelindividuen sowie Gemischen aus zwei oder mehr Einzelindividuen.

Die Katalysatorkomponente (2) betreffend ist zu sagen, dass sich hierfür die einschlägig üblichen Verbindungen eignen; als geeignete Individuen sind z.B. zu nennen das $Al(C_2H_5)_3$, $Al(i\text{-}C_4H_9)_3$, $Al(n\text{-}C_4H_9)_3$, $Al(C_8H_{17})_3$ und Isoprenylaluminium.

Abschliessend ist noch zu bemerken, dass die erfindungsgemässen Titan enthaltenden Katalysatorkomponenten (1) empfindlich gegen hydrolytische sowie oxidative Einflüsse sind. Insoweit sollte man beim Umgang mit diesen Substanzen also die für Ziegler-Katalysatoren einschlägig üblichen Vorsichtsmassnahmen treffen (z.B. Feuchtigkeitsausschluss, Inertgasatmosphäre).

Beispiel

a) Herstellen der Titan enthaltenden Katalysatorkomponente

Erste Stufe

Ein handelsübliches Mischchlorid (I) des dreiwertigen Titans mit der Formel $TiCl_3 \cdot 0{,}33\ AlCl_3$ und eine Halogenverbindung (II), die erhalten worden ist durch ein 8 Stunden dauerndes Heisshalten auf einer Temperatur von 160 °C und anschliessendes Chlorieren mittels Phosgen bei einer Temperatur von 330 °C bis zu einem Chlorgehalt des Materials von 66 Gewichtsprozent aus einem Stoff (III) der Formel $Mg_6 \cdot Al_2 \cdot (OH)_{16} \cdot (CO_3)_1 \cdot (H_2O)_4$ werden im Gewichtsverhältnis Titanverbindung (I) : Halogenverbindung (II) von 1:9 über eine Zeitspanne von 15 Stunden unter einer Mahlbeschleunigung von 5 m/s$^2$ trocken miteinander vermahlen (in einer üblichen Kugelmühle) unter Bildung eines festphasigen Zwischenprodukts (IV).

Zweite Stufe

1 Gewichtsteil des aus der ersten Stufe erhaltenen Zwischenprodukts (IV), 0,26 Gewichtsteile Äthanol (V) und 20 Gewichtsteile n-Heptan (VI) werden derart zusammengebracht, dass man zunächst das Zwischenprodukt im n-Heptan suspendiert und dann innerhalb von 5 Minuten das Äthanol zur Suspension gibt. Das Ganze (= Suspension VII) wird daraufhin unter kräftigem Rühren über eine Zeitspanne von 5 Minuten auf einer Temperatur von 25 °C gehalten.

Dritte Stufe

Die aus der zweiten Stufe erhaltene Suspension (VII) wird auf eine Temperatur von 50 °C gebracht und bei dieser Temperatur mit n-Propionylchlorid unter Erhaltung des Zustandes einer Suspension solange langsam (15 Minuten) versetzt, bis das Atomverhältnis Titan aus dem in der Suspension (VII) enthaltenen Feststoff : Chlor aus dem Acylhalogenid (VIII) 1:15 beträgt. Anschliessend wird das Ganze bei einer Temperatur von 75 °C noch eine weitere Stunde gerührt.

Das aus der dritten Stufe resultierende, in Suspension vorliegende festphasige Produkt, d.h. die gewünschte Titan enthaltende Katalysatorkomponente, wird isoliert durch Absaugen, Wa-

schen mit n-Heptan und Trocknen bei 25 °C unter vermindertem Druck; der Titangehalt beträgt 1,26 Gewichtsprozent, der Chlorgehalt 45,0 Gewichtsprozent.

b) Polymerisation mittels der Titan enthaltenden Katalysatorkomponente.

In einem Rührautoklaven – der damit zur Hälfte seines Fassungsvermögens gefüllt ist – werden 4500 Gewichtsteile Isobutan vorgelegt; daraufhin fügt man 0,2 Gewichtsteile der erfinderfindungsgemässen Katalysatorkomponente (in Form einer 15 Gew.% Feststoff enthaltenden Suspension in n-Heptan) sowie 2,5 Gewichtsteile Triäthylaluminium zu. Sodann wird unter Rühren und bei den – jeweils durch Regelung konstant gehaltenen – Parametern: Äthylendruck = 15 bar, Wasserstoffdruck (zur Molekulargewichtsregelung) = 5 bar, Temperatur = 100 °C, über eine Zeitspanne von 2 Stunden polymerisiert, wonach die Polymerisation durch Entspannen des Autoklaven abgebrochen wird.

Nähere Angaben zu dem erhaltenen Polymerisat finden sich in der unten stehenden Tabelle.

Vergleichsversuch A

a) Herstellen der Titan enthaltenden Katalysatorkomponente

Erste und zweite Stufe:

Sie erfolgen in Identität zum Beispiel

Dritte Stufe:

Sie entfällt.

Das aus der zweiten Stufe resultierende, in Suspension vorliegende festphasige Produkt, d.h. die zu vergleichende Titan enthaltende Katalysatorkomponente, wird – in Analogie zum Beispiel – isoliert durch Absaugen, Waschen mit n-Heptan und Trocknen bei 25 °C unter vermindertem Druck.

b) Polymerisation mittels der Titan enthaltenden Katalysatorkomponente

Sie erfolgt unter identischen Bedingungen wie im Beispiel, jedoch unter Verwendung der aus der zweiten Stufe erhaltenen Katalysatorkomponenten.

Nähere Angaben zu dem dabei erhaltenen Polymerisat finden sich ebenfalls in der unten stehenden Tabelle.

Vergleichsversuch B

a) Herstellen der Titan enthaltenden Katalysatorkomponente

Erste Stufe

Sie erfolgt in Identität zum Beispiel.

Zweite und dritte Stufe

Sie entfallen beide.

b) Polymerisation mittels der Titan enthaltenden Katalysatorkomponente.

Sie erfolgt unter identischen Bedingungen wie im Beispiel, jedoch unter Verwendung der aus der ersten Stufe erhaltenen Katalysatorkomponente (= Zwischenprodukt IV).

Nähere Angaben zu dem dabei erhaltenen Polymerisat finden sich wiederum in der unten stehenden Tabelle.

In der Tabelle bedeuten:

PE = Ausbeute an Polyäthylen in Gewichtsteilen

PE/Kk = Produktivität in Gewichtsteilen Polyäthylen pro Gewichtsteil erfindungsgemässer Katalysatorkomponente

PE/Ti = Produktivität in Gewichtsteilen Polyäthylen pro Gewichtsteil Titan in der erfindungsgemässen Katalysatorkomponente

Sch = Schüttgewicht in g/l

$$MI = \text{Schmelzindex } Mi \frac{190}{2{,}16} \text{ (g/10 Min)}$$

%<0,1 = Anteil an Polyäthylen-Partikeln in Gewichtsprozent mit einem Teilchendurchmesser von kleiner 0,1 mm (Feinstkornanteile).

| Beispiel bzw. Vgl.-Vers. | PE | PE/Kk | PE/Ti | Sch | MI | %<0,1 |
|---|---|---|---|---|---|---|
| Beisp. | 2000 | 10 000 | 790 000 | 442 | 9,4 | 4,3 |
| Vgl. A | 2650 | 13 300 | 560 000 | 280 | 4,5 | 0,7 |
| Vgl. B | 2490 | 12 500 | 500 000 | 270 | 0,5 | 5,6 |

**Patentanspruch**

Verfahren zum Herstellen von Homo- und Copolymerisaten von $C_2$- bis $C_6$-α-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und

(2) einer Aluminiumverbindung der Formel

$$AlA_{3-n}X_n,$$

worin stehen

A für einen $C_1$- bis $C_{12}$-Kohlenwasserstoffrest,

X für Chlor, Brom bzw. Wasserstoff und

n für eine Zahl von 0 bis 2,

mit den Massgaben, dass das Atomverhältnis Titan aus der Katalysatorkomponente (1) : Aluminium aus der Katalysatorkomponente (2) im Bereich von 1:0,1 bis 1:500 liegt, und dass man

(1.1) zum Herstellen der Katalysatorkomponente (1)

(1.1.1) eine unter Normalbedingungen feste Titanverbindung (I) aus der Reihe der Chloride, Oxychloride bzw. Alkoxychloride des drei- bzw. vierwertigen Titans, wobei die Alkoxygruppen jeweils bis zu 8 Kohlenstoffatome aufweisen können, oder der Mischchloride des dreiwertigen Titans mit der Formel

$$TiCl_3 \cdot Z\ (AlCl_3),$$

wobei Z eine Zahl von weniger als 0,5 ist, und

(1.1.2) eine Halogenverbindung (II), die erhalten worden ist durch ein 1 bis 100 Stunden dauerndes Heisshalten auf einer Temperatur von 150 bis 600 °C und anschliessendes Chlorieren bis zu einem Chlorgehalt des Materials von 40 bis 76 Gewichtsprozent, aus einem Stoff (III) der allgemeinen Formel

$$(Me^{II})_6 \cdot (Me^{III})_2 \cdot (OH)_{16} \cdot (CO_3)_1 \cdot (H_2O)_4,$$

worin stehen

$Me^{II}$ für Magnesium, Calcium, Zink bzw. Mangan und

$Me^{III}$ für Aluminium bzw. Chrom,

im Gewichtsverhältnis Titanverbindung (I) : Halogenverbindung (II) von 1:200 bis 1:2 über eine Zeitspanne von 5 bis 100 Stunden unter einer Mahlbeschleunigung von 4 bis 6 m/s² miteinander vermahlt unter Bildung eines festphasigen Vermahlungsprodukts (IV), dadurch gekennzeichnet, dass man beim Herstellen der Katalysatorkomponente (1)

(1.2) in einer zusätzlichen Stufe

(1.2.1) das gemäss (1.1) erhaltene Vermahlungsprodukt (IV),

(1.2.2) ein $C_1$- bis $C_{12}$-Alkanol (V) und

(1.2.3) ein $C_5$- bis $C_{12}$-Alkan (VI)

in den Gewichtsverhältnissen Vermahlungsprodukt (IV) : Alkanol (V) von 1:0,01 bis 1:1 und Vermahlungsprodukt (IV) : Alkan (VI) von 1:1 bis 1:1000 zusammenbringt unter Bildung einer Suspension (VII) und das Ganze bei dauernder Durchmischung über eine Zeitspanne von 0,5 bis 60 Minuten auf einer Temperatur von 0 bis 195 °C hält und dann

(1.3) in einer weiteren Stufe

(1.3.1) die gemäss (1.2) erhaltene Suspension (VII) mit

(1.3.2) einem Acylhalogenid (VIII) der allgemeinen Formel

$$R-CO-X$$

worin stehen R für einen gesättigten $C_1$- bis $C_{18}$-Kohlenwasserstoffrest – mit der Massgabe, dass in dem genannten Rest bis zu 3 Wasserstoffatome durch Cl bzw. Br substituiert sein können – und X für F, Cl, Br bzw. J,

unter Erhaltung des Zustandes einer Suspension solange versetzt, bis das Atomverhältnis Titan aus dem in der Suspension (VII) enthaltenen Feststoff: (Acyl-)Halogen aus dem Acylhalogenid (VIII) im Bereich von 1:0,01 bis 1:100 liegt;

wobei das aus Stufe (1.3) resultierende, in Suspension vorliegende festphasige Produkt die Titan ent haltende Katalysatorkomponente (1) ist.

**Revendication**

Procédé pour la préparation d'homo- et copolymères d'α-monooléfines en $C_2$ à $C_6$ par polymérisation du ou des monomères à des températures de 30 à 200 °C et sous des pressions de 0,1 à 200 bars, au moyen d'un système catalyseur de Ziegler formé (1) d'un constituant de catalyseur contenant du titane et (2) d'un composé d'aluminium de formule

$$AlA_{3-n}X_n,$$

dans laquelle

A est mis pour un radical hydrocarboné en $C_1$ à $C_{12}$,

X est mis pour un chlore, un brome ou un hydrogène et

n est un nombre de 0 à 2

avec ces conditions particulières que le rapport atomique du titane du constituant de catalyseur (1) à l'aluminium du constituant de catalyseur (2) se situe dans la gamme de 1:0,1 à 1:500 et que,

(1.1) pour la préparation du constituant de catalyseur (1),

(1.1.1) un composé du titane (I), solide dans les conditions normales, de la série des chlorures, oxychlorures ou alcoxychlorures du titane tri-ou tétravalent, les groupes alcoxy pouvant comporter jusqu'à 8 atomes de carbone, ou des chlorures mixtes du titane trivalent répondant à la formule

$$(TiCl_3 \cdot Z\,(AlCl_3)),$$

Z étant un nombre de moins de 0,5, et

(1.1.2) un composé halogéné (II), qui a été obtenu par un maintien à la chaleur d'une durée de 1 à 100 heures, à une température de 150 à 600 °C, suivi d'une chloration jusqu'à une teneur en chlore de la substance de 40 à 76% en poids, à partir d'un produit (III) de formule générale

$$(Me^{II})_6 \cdot (Me^{II})_2 \cdot (OH)_{16} \cdot (CO_3)_1 \cdot (H_2O)_4,$$

dans laquelle

$Me^{II}$ représente le magnésium, le calcium, le zinc ou le manganèse

$Me^{III}$ représente l'aluminium ou le chrome,

sont broyés ensemble dans un rapport pondéral du composé du titane (I) au composé halogéné (II) de 1:200 à 1:2, pendant un laps de temps de 5 à 100 heures, avec une accélération de broyage de 4 à 6 m/s², pour former un produit de broyage (IV) en phase solide,

caractérisé en ce que lors de la préparation du constituant de catalyseur (1)

(1.2) en un stade supplémentaire,

(1.2.1) le produit de broyage (IV) obtenu suivant (1.1),

(1.2.2) un alcanol en $C_1$ à $C_{12}$ (V) et

(1.2.3) un alcane en $C_5$ à $C_{12}$ (VI)

sont réunis dans un rapport pondéral du produit de broyage (IV) à l'alcanol (V) de 1:0,01 à 1:1 et du produit de broyage (IV) à l'alcane (VI) de 1:1 à 1:1000, pour former une suspension (VII) et le tout est maintenu sous mélange permanent, pendant un laps de temps de 0,5 à 60 minutes, à une température de 0 à 195 °C, puis

(1.3) en un autre stade,

(1.3.1) la suspension (VII) obtenue suivant (1.2) et

(1.3.2) un halogénure d'acyle (VIII) de formule générale ,

R–CO–X,

dans laquelle R est mis pour un radical hydrocarboné saturé en $C_1$ à $C_{18}$ – avec cette condition que, dans le radical mentionné, jusqu'à 3 atomes d'hydrogène peuvent être substitués par Cl ou Br – et X est mis pour F, Cl, Br ou J,
sont mélangés, avec maintien de l'état d'une suspension, jusqu'à ce que le rapport atomique du titane de la matière solide contenue dans la suspension (VII) à l'halogène de l'halogénure d'acyle (VIII) se situe dans la gamme de 1:0,01 à 1:100; le produit en phase solide se présentant en suspension, qui résulte du stade (1.3) étant le constituant de catalyseur contenant du titane (1).

**Claim**

Process for the preparation of homopolymers and copolymers of $C_2$- to $C_6$-α-monoolefines by polymerising the monomer or monomers at temperatures of 30 to 200 °C and pressures of 0,1 to 200 bar by means of a Ziegler catalyst system comprising

(1) a titanium-containing catalyst component and

(2) an aluminium compound of the formula

$$AlA_{3-n}X_n$$

wherein

A represents a $C_1$- to $C_{12}$-hydrocarbon radical,

X represents chlorine, bromine or hydrogen and

n represents a number from 0 to 2,
with the provisos that the atomic ratio of titanium from the catalyst component (1) : aluminium from the catalyst component (2) is in the range from 1:0,1 to 1:500, and that

(1.1) to prepare the catalyst component (1)

(1.1.1) a titanium compound (I), which is solid under normal conditions, from the series of the chlorides, oxychlorides and alkoxychlorides of trivalent or tetravalent titanium, the alkoxy groups each being allowed to have up to 8 carbon atoms, or of the mixed chlorides of trivalent titanium of the formula

$$TiCl_3 \cdot Z(AlCl_3)$$

where Z is a number smaller than 0,5, and

(1.1.2) a halogen compound (II), which has been obtained from a compound (III) of the general formula

$$(Me^{II})_6 \cdot (Me^{III})_2 \cdot (OH)_{16} \cdot (CO_3)_3 \cdot (H_2O)_4$$

wherein

$Me^{II}$ represents magnesium, calcium, zinc or manganese and

$Me^{III}$ represents aluminium or chromium, by keeping the compound hot, at a temperature of 150 to 600 °C, for 1 to 100 hours and then chlorinating it to a chlorine content of the material of 40 to 76 per cent by weight,
are milled together in the weight ratio of titanium compound (I):halogen compound (II) of 1:200 to 1:2, for a period of 5 to 100 hours, under a milling acceleration of 4 to 6 $m/s^2$, to form a solid-phase milled product (IV), characterised in that when preparing the catalyst component (1),

(1.2) in an additional stage

(1.2.1) the milled product (IV) obtained according to (1.1),

(1.2.1) the milled product (IV) obtained according to (1.1),

(1.2.2) a $C_1$- to $C_{12}$-alkanol (V) and

(1.2.3) a $C_5$- to $C_{12}$-alkane (VI)
are brought together in the weight ratios of milled product (IV):alkanol (V) = 1:0,01 to 1:1 and milled product (IV):alkane (VI) = 1:1 to 1:1,000, to form a suspension (VII), and the whole is kept at a temperature of 0 to 195 °C for a period of 0,5 to 60 minutes, with constant mixing, and thereafter

(1.3) in a further stage

(1.3.1) there is added, to the suspension (VII) obtained according to (1.2),

(1.3.2) an acyl halide (VIII) of the general formula

R–CO–X

wherein R represents a saturated $C_1$- to $C_{18}$-hydrocarbon radical, with the proviso that in the said radical up to 3 hydrogen atoms can be replaced by Cl or Br – and X represents F, Cl, Br or I, while maintaining the state of a suspension, until the atomic ratio of titanium from the solid contained in suspension (VII):(acyl-) halogen from the acyl halide (VIII) is in the range from 1:0,01 to 1:100,
the solid-phase product resulting from stage (1.3) and present in suspension being the titanium-containing catalyst component (1).